# EUROPEAN PATENT SPECIFICATION

(11) **EP 0 667 950 B1**
(45) Date of publication and mention of the grant of the patent: **13.02.2002**
(21) Application number: 94901380.9
(22) Date of filing: 04.11.1993
(51) Int. Cl.: G01B 5/16

(54) **APPARATUS FOR MEASURING SCREW THREADS BY 3-WIRE METHOD**
VORRICHTUNG ZUM MESSEN VON SCHRAUBENGEWINDEN MITTELS DREIDRAHTVERFAHRENS
APPAREIL DE MESURE DE FILETS DE VIS PAR LE PROCEDE A 3 FILS

(30) Priority: 05.11.1992 US 972248; 10.09.1993 US 120174
(43) Date of publication of application: 23.08.1995
(73) Proprietor: KIPNES, Hyman Jack, Hauppauge, NY 11788 (US)
(72) Inventor: KIPNES, Hyman Jack, Hauppauge, NY 11788 (US)
(74) Representative: Skone James, Robert Edmund
(86) International application number: PCT/US93/10847
(87) International publication number: WO 94/10531

(56) References cited:
- GB-A- 555 830
- GB-A- 583 385
- US-A- 2 692 438
- US-A- 2 805 483
- US-A- 2 906 029
- US-A- 4 821 422
- US-A- 5 175 935

## Description

### FIELD OF THE INVENTION

This invention relates to an apparatus for measuring the pitch diameter of screw threads, by utilizing the traditional three-wire method, in which the measuring wires are optimally held in place within the flanks of screw threads during measurement, without shifting and deviation from preferred orientation of measuring wires within respective screw threads.

### BACKGROUND ON THE INVENTION

In order to provide for accurate tightening of screws, and for accurate mating of outside threads to fasteners with inside threads, outside screw threads must be meticulously measured for uniformity. The "pitch" of a screw thread is the distance between a point on a screw thread and the corresponding point on the adjacent thread in a line parallel with the axis of the screw. Moreover, the "pitch diameter" of a screw is the diameter of a screw measured from a midpoint on the flank surface of a screw thread through the screw to an opposite midpoint on a flank of the screw thread of the screw, in a direction perpendicular to the axis of the screw. In other words, on a straight thread, the pitch diameter is the diameter of the cylinder whose surface passes through the thread profiles at such points as to make the widths of thread groove and thread ridge equal.

In addition to pitch diameter, the major diameter of a screw thread, which is the distance from the outside of one side of the screw thread to the opposite side, is conventionally measured by a standard micrometer.

The minor diameter, however, which is the diameter from the interior base of the screw thread to an opposite interior base of the screw thread, is conventionally measured by a ring gauge, which follows the surface of the thread.

Various methods have been provided for measuring screw threads by using these aforementioned three wires for measuring the pitch diameter of the screw threads. Screw threads are measured in accordance with United States Department of Commerce, National Bureau of Standards HANDBOOK H28, entitled "Screw-Thread Standards For Federal Services-Appendix For Methods of Wire Measurement of Pitch Diameter of 60 degree Threads". According to the federal standards, the measurement of the pitch diameter, that is the distance between the centers of two adjacent screw threads, the measurement must be accurate with no room for movement of the wires, which are placed upon the flank surfaces within the screw threads for the purpose of measuring the pitch and the pitch diameter.

It is further noted that while the aforementioned appendix applies to 60 degree threads, other angled threads are similarly measured.

In a typical orientation and use, one elongated hardened steel longitudinally extending center wire is placed upon the flank surfaces within the tapered walls of the screw thread. On the opposite side of the screw thread to this center wire are two offset wires upon the flank surfaces in the corresponding tapered walls between the threads of the screw.

Typically small hardened steel longitudinally extending cylinder wires are placed in the thread groove, the two offset wires on one side of the screw and the one single center wire on the opposite side.

In the prior art, various holders are described for holding the wires within a micrometer anvil so that one holder, such as that having the two offset wires, is advanced towards the opposite holder with the center wire.

As noted above, the wires should be placed such that the outside circumference of the cylindrical wire touches exactly the mid slope of the flank of the thread of a given pitch. In the prior art, in order to hold the wires exactly in the proper measuring position, two movable holding members, such as rubber bands or springs, are typically used to hold the wires still in place during the measurement of the screw threads. However, use of the "movable" holders, such as rubber bands or springs, is frowned upon in government standards as well as in standard engineering texts, such as the Machinery Handbook, which notes that the three measuring wires should be firmly held in place during measurement.

When standard micrometers are used, however, often the use of the three-wire method for measuring screw threads is an unwieldy manual process, in which the user must hold the anvil of the micrometer in one hand, as well as the holders for the three wires, while the other hand moves the handle to rotate the spindle of the micrometer and thereby move the double offset wires towards the single center wire. This movement enables the wires to make contact with the thread groove.

Various devices have been patented to attempt to use the three-wire method for measuring screw threads. Among these are U.S. Patent Nos. 2,431,021 of Bourdelais, 2,939,220 of Croshier, 2,822,624 of Klink, 2,692,438 of Schneider, 2,906,029 also of Croshier, 2,962,817 of Barney, 4,480,388 of O'Brien, 4,553,337 of Brewster, 4,590,678 of Arredondo, 4,777,361 of Affa, 4,821,422 of Porter and 4,939,845 also of Porter, 4,947,555 of Allen and 5,175,935 of Welter.

These patents generally disclose wire holding attachments for the three-wire method of measuring pitch diameters of screw threads. However, some of the known devices have significant disadvantages, such as the fact that the devices cannot hold the three wires firmly in place, within the screw threads, because of the use of springs which, as the springs are compressed smaller, results in the likelihood that there is increasing pressure upon the three wires, which may result in the possibility of the dislodging of the wires.

Such use of springs is disclosed in the Croshier '220 and '029 patents. In Croshier '220, two off-set wires, which are held in place against the screw threads, are movable, which can cause inaccuracies of the measurements. Likewise, in Croshier '029, the wires are held apart by a hub, so that the wire pins float, and are not locked in a solid position against the flank surfaces within the screw threads.

Furthermore, in Croshier '220, the holes holding the wires are larger than the diameter of the cylindrical wires, which may cause the wires to shift while conforming to the flank surfaces of the screw threads. The shifting may result in inaccurate measurements and is therefore contraindicated according to the aforementioned Federal standards and engineering handbooks.

Moreover, O'Brien '388 requires a flexible holder, such as a rubber band, which is not permitted under the federal Handbook H28.

Many of the prior art patents have complicated moving parts and springs, which do not provide for accurate measurement of screw threads. Another problem with the prior art devices, such as O'Brien '388, is that they do not have a positive means for the wires to adjust to the lead angle of the threads being measured.

The Michaud '591 Patent describes a ridged gage tip and the Brewster '337 Patent discloses the use of a control screw thread to measure a screw thread, but it has the disadvantage that it may move too much in place for accurate measurement. The Allen '555 Patent describes rotating measuring balls instead of longitudinally extending straight wires, which makes it difficult to locate the exact center of the screw diameter. Affa '361 describes a housing with a measuring scanning unit, and Arredondo '678 discloses use of a single wire instead of three wires to measure threads. Moreover, since the outer side of the screw thread opposite to the single wire is held against a flat surface, the measurement is inaccurate because if the outside diameter of a screw thread varies, the pitch diameter measurement will be inaccurate.

The remaining patents have complicated moving parts and springs, which do not provide for accurate measurement of screw threads. Another problem with the prior art devices, such as O'Brien '388, is that they do not have a positive means for the wires to adjust to the lead angle of the threads being measured.

In an unpatented prior art publication, there is shown a three wire measuring system in the catalog of the Mahr Gage Co., Inc. of 274 Lafayette St., New York, New York, which defines a calibration device which includes a pair of holder ear pieces for holding the respective center wire and two off-set wires against the screw threads at opposite sides of the screw threads being measured. In the Mahr system, the two sets of wires move in place as the spindle of a micrometer is advanced towards the other wire holder with the single center wire.

The disadvantage of the Mahr device is that the wires are advanced towards each other in a horizontal orientation, thereby resulting in the possibility of inaccuracies, because of the effect of gravity upon the horizontally oriented holder ear pieces for the wires. In the Mahr the wires are solely held in place against gravity in a horizontal position by the wire holder ears. Moreover, in the Mahr device the wires are held in place in one location within the holder ear pieces, so that if the wire tends to wear out where it is being used to measure on a frequent basis, the wires cannot be moved in an axial direction so as to expose a further portion of the wire, which is not worn, out to the screw threads.

Moreover, a further disadvantage of the prior art is the use of a complicated ring gauge, which must travel the length of the screw threads, to measure the minor diameter of the screw threads.

GB-A-583385 discloses apparatus for implementing the three wire system of measuring the effective diameter of a screw thread. The apparatus uses a first wire holder which is fixed to the angle of a micrometer. The second wire holder is then provided which is rotatably mounted to the spindle of the micrometer such that the second wire holder may be progressively moved towards the first wire holder. Motion of the second wire holder is constrained by having the wire holder engage the angle of the micrometer. Unfortunately, this suffers from the major disadvantage that this system can only be implemented with a specific design of micrometer which allows the wire holders to be coupled to the spindle and anvil respectively.

### OBJECTS OF THE INVENTION

Therefore, it is an object of the present invention to provide an apparatus for the three-wire measurement of screw threads using a standard hand-held micrometer, in which the improvement lies in the generally vertical orientation of the wires, within a restricted rotational field, to keep the wires from spinning 360 degrees, and thereby causing measurement inaccuracies.

A further object of the present invention is to provide an apparatus for measuring screw threads with the three-wire method, in which the wires are limited in their rotation.

A further object of present inventions is to provide an apparatus for automatically aligning up wires of a three-wire method for measuring screw threads.

A further object of present inventions is to provide an apparatus for automatically aligning up wires of a three-wire method for measuring the pitch diameter of screw threads, thereby insuring the correct contact with the helix angle of the thread.

It is a further object of the present invention to provide for a means for holding the screw with the screw threads being measured in a horizontal position, to accommodate the vertically oriented three measuring wires.

It is a further object of the present invention to provide a means for moving the wires in between uses.

It is a further of object of the present invention to accurately measure the minor diameter of screw threads.

It is a further object of the present invention to improve over the disadvantages of the prior art.

### SUMMARY OF THE INVENTION

In keeping with the foregoing objects and others which may come apparent, there is provided a device and apparatus for accurately moving wires for measuring screw threads efficiently into a vertical orientation for measuring the pitch diameter of the screw threads, wherein the wires are limited in their rotation away from a vertical axis of orientation, as noted in the appended drawings.

An optional embodiment is for a hand held apparatus that positions the wire holders and the three measuring wires in correct alignment for engaging the exact midslope of the screw thread flank to be measured. The apparatus is attached to the micrometer, allowing one hand to hold the measuring device while the other hand positions the screw thread for measurement.

Holders for the measuring wires are fitted on the spindle and anvil of a measuring micrometer, allowing a single center wire and an opposite pair of double wires to be accurately positioned in relation to each other. This positioning of the three measuring wires places the wires in correct alignment for engaging the exact midslope of the screw thread flank being measured.

The single center wire and the opposite pair of double wires are secured in place, within the rectangular holders by set screws, or other fastening means, while being held within grooves, or holes, within upper and lower horizontally extending cantilevered portions of the holders. The wires extend longitudinally longer than the vertically extending height of the holder, so that the wires can be adjusted up or down within the holders when a portion of the wires becomes worn through use. This feature extends the useful life of the wires.

It is preferable that the measuring wires be oriented vertically to minimize the effects of gravity upon the static position of the measuring wires. A horizontally extending measuring wire may be inherently unstable, because gravity may tend to cause a "see saw" type of movement. To insure the preferred generally vertical orientation of the wires, the wire holders are weighted at the bottom and ride within a limited rotational field within a restrained area, such as a U-shaped track. The 'holders are limited in their rotational movement by the U-shaped track, which assists in aligning the wires in the thread grooves. Therefore, the wires are maintained in an ideal position for engaging any lead angle of a thread to be measured. The measuring devices according to the invention are defined in the appended claims 1 and 20.

A more complete understanding of this invention can be obtained from the following detailed description of the drawings, in which, when read in conjunction with the accompanying drawings, similar elements are referred to and indicated by referenced numerals.

### BRIEF DESCRIPTION 0F DRAWINGS

FIG. 1 is a perspective view of the apparatus of the present invention.

FIG. 2 is a close-up perspective view of the apparatus of the present invention as shown in FIG. 1.

FIG. 3 is a top plan view of a portion of the apparatus of the present invention as shown in FIG. 1.

FIG. 4 is a side elevation view of the apparatus of the present invention as shown in FIG. 1.

FIG. 4A is a closeup view of an alternate collar holder for the screw being measured.

FIG. 5 is a further close-up perspective view of the apparatus of the present invention as shown in FIG. 1.

FIGS. 6-8 are side, rear and front elevational views of a wire holder for a single center wire of the apparatus of the present invention.

FIGS. 9-11 are rear, front and side elevational views of a wire holder ear for two off-set wires of the apparatus of the present invention.

FIG. 12 is a close-up view of a typical screw with the pitch diameter of screw threads being measured by the present invention.

FIG. 12A is a close-up view of a typical screw with the minor diameter of screw threads being measured by the present invention.

FIGS 12B-12D are top, front and side views of a tapered wire used in conjunction with measuring the minor diameter of screw threads, as shown in FIG 12A.

FIGS. 12E-12G are top, front and side views of an alternate embodiment of the screw thread engaging portion of the present invention.

FIGS. 12H-12J are top, front and side views of a further alternate embodiment of the screw thread engaging portion of the present invention.

FIG. 13 is a close-up perspective view of the apparatus of the present invention as shown in FIG.1.

FIG. 14 is a perspective view of an alternate hand-held embodiment of the present invention.

FIG. 14A is a perspective view of the rotational movement limiting device thereof.

FIG. 15 is a perspective view of the wire holder portion of the device.

FIG. 16 is a perspective view of an alternate wire holder portion of the device.

FIG. 17 is a perspective view of a retaining spring clip for the alternate wire holder in Fig. 16.

FIG. 18 is a perspective view of the holder as in Fig.16 assembled with the retaining spring clip of Fig. 17.

FIG. 19 is a top view of the wire holder and clip as in Fig. 18.

FIG. 20 is a close up view of the wire holder and clip as in Fig. 19.

FIG. 21 is a perspective view of an alternate rotational movement limiting device of the present invention.

FIG. 22 is a perspective view of the wire holder portion of the rotational movement limiting device of the present invention, as shown in FIG. 14.

FIG. 23 is a side elevation view in partial cross section of the rotational movement limiting device of the present invention as shown in FIG. 14.

FIG. 24 is a front elevational view of the rotational movement limiting device of the present invention as shown in FIG. 14.

FIG. 25 is a close up view of a typical screw with the pitch diameter being measured by the present invention.

### DETAILED DESCRIPTION OF A PREFERRED EMBODIMENT

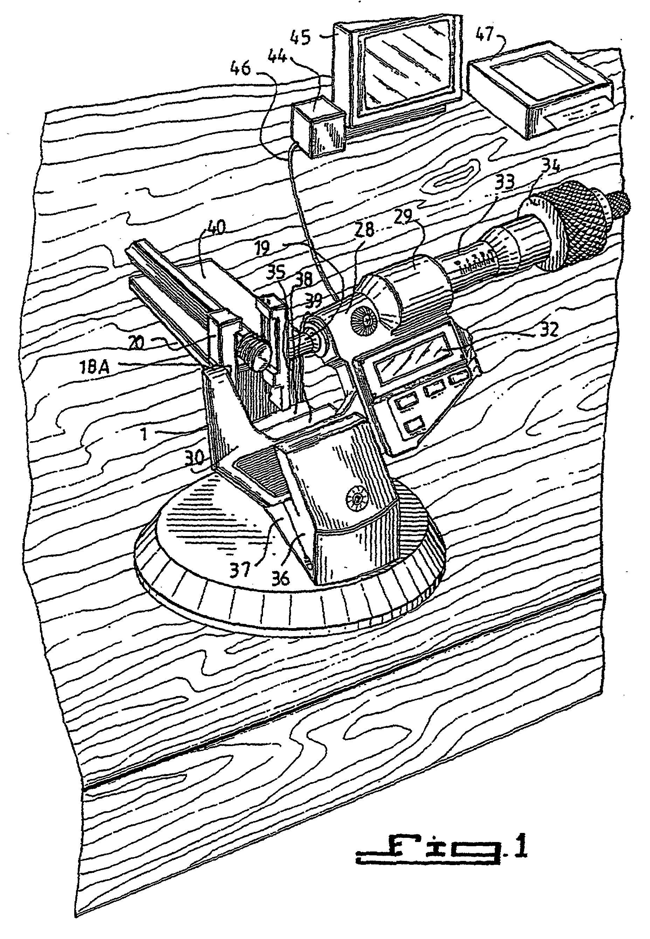

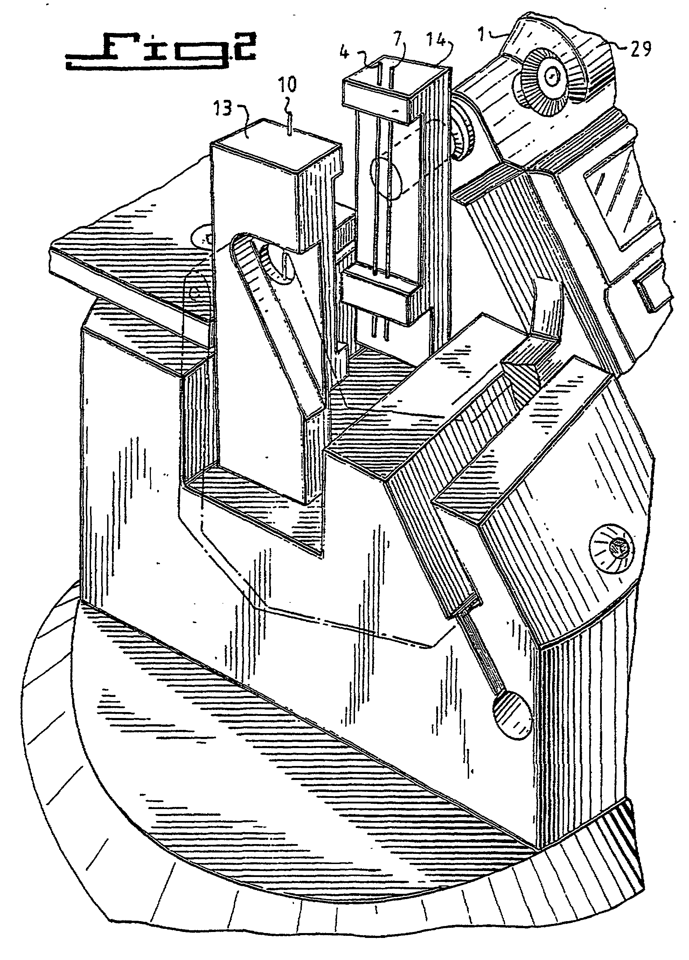

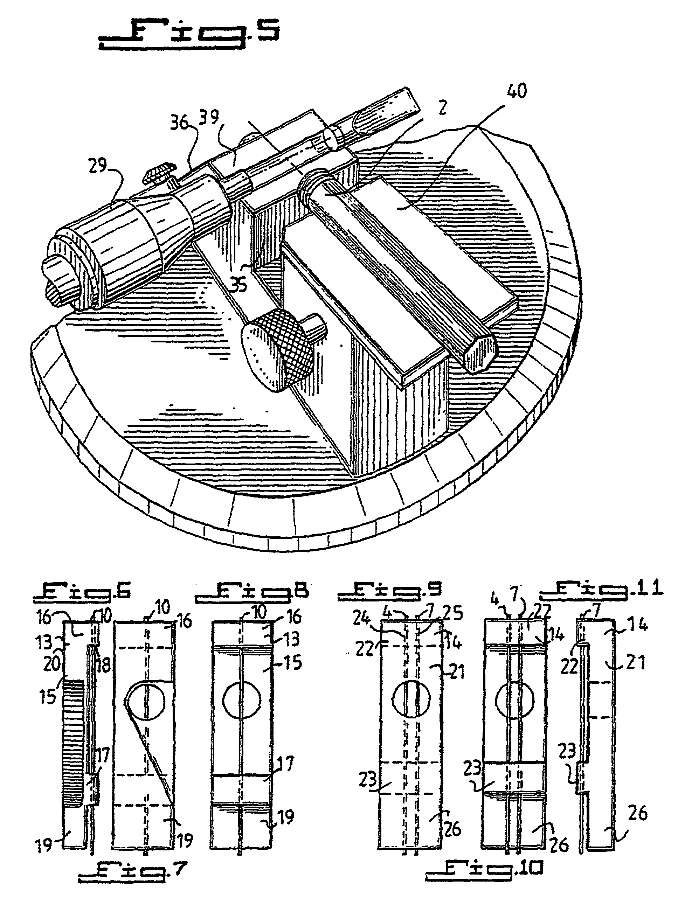

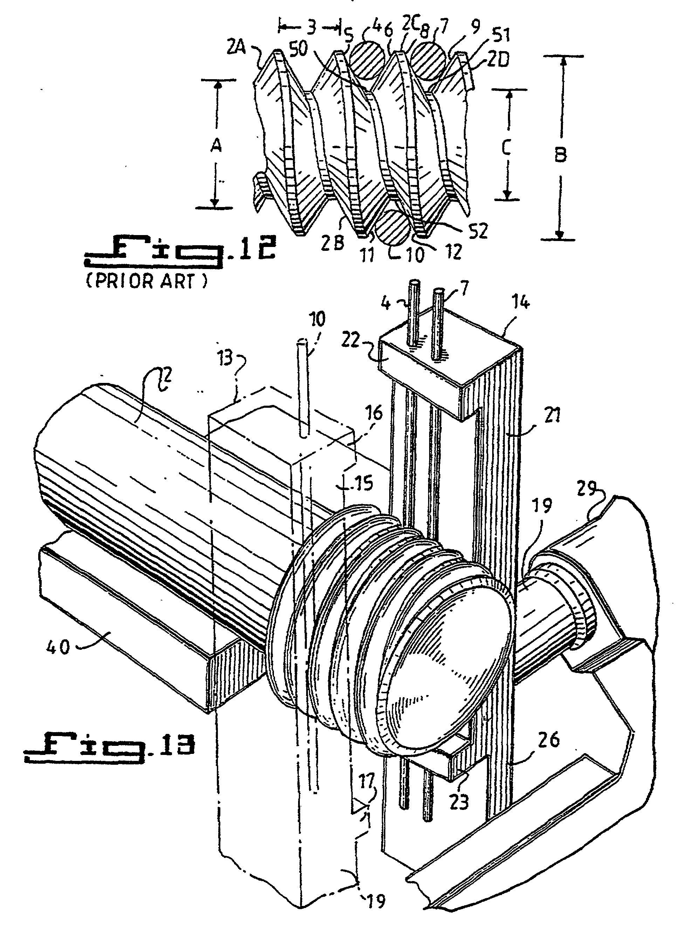

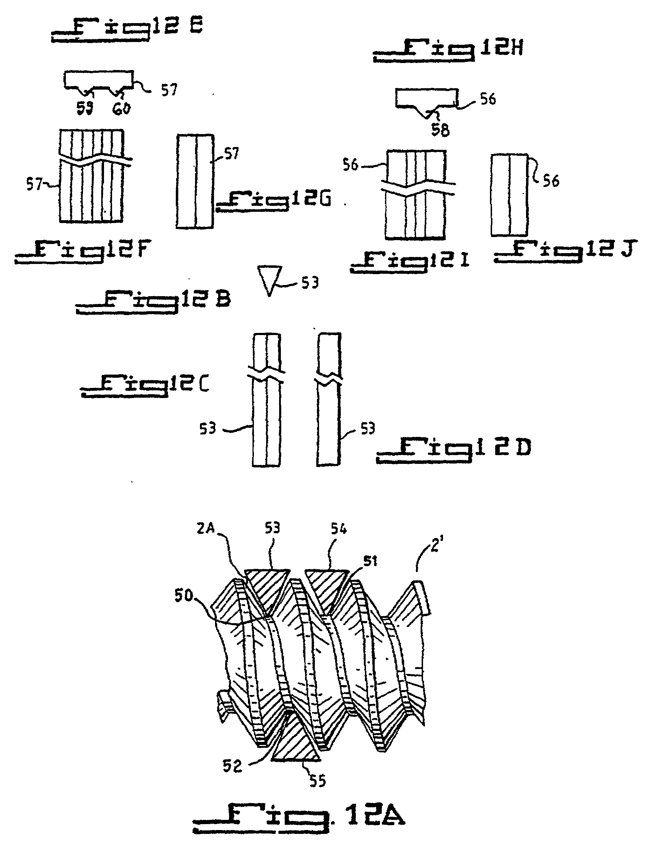

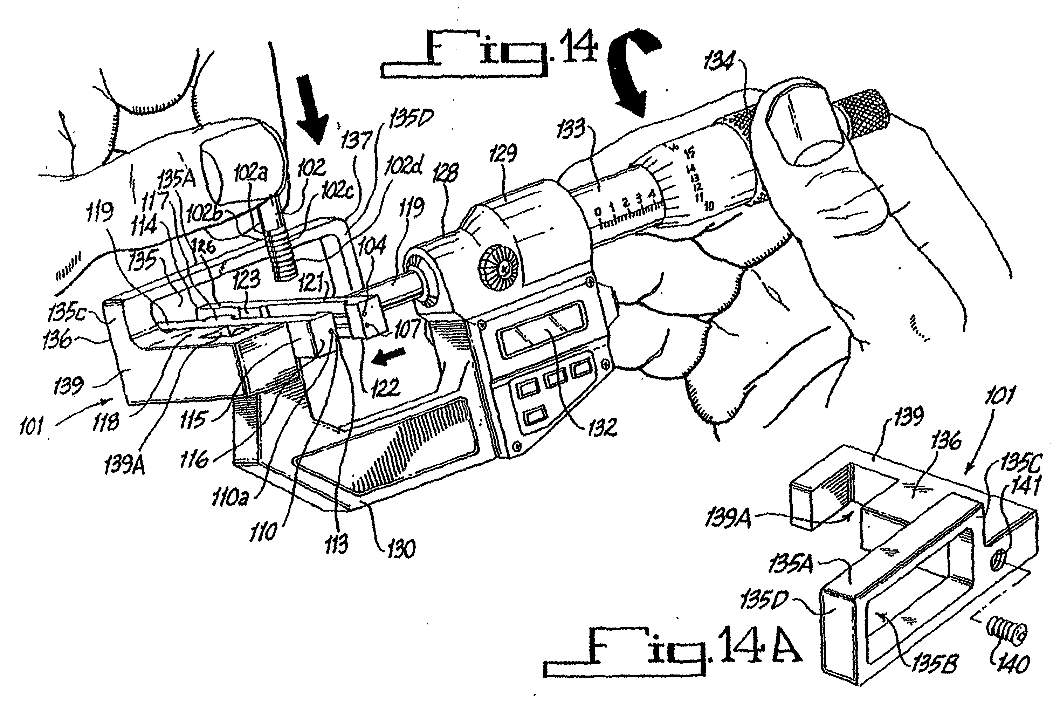

A first embodiment of the present invention is shown , and described by way of example in FIGS. 1-13. In the drawing FIGS. 1-13 there is provided an apparatus 1 for measuring the pitch diameter of screw threads, with the three-wire method, of a screw 2 having threads 2A, 2B, 2C, 2D respectively, wherein the pitch diameter is measured by pair of off-set wires 4 and 7, which are held against adjacent screw threads opposite to a single center wire 10. Reference numeral 3 designates the "pitch", of the linear distance from one screw thread to another.

As shown in FIG. 12, the pitch diameter of the threads of screw 2 is designated as A. The major diameter is designated as B, and the minor diameter is designated as C.

Wire 4 is held within the tapered wire contacting flank walls 5 and 6 of screw 2. Wire 7 is held in place within the tapered contacting flank walls 8 and 9 of the screw 2. The single center wire 10 is held in place within the tapered walls contacting flank walls 11 and 12 of the screw 2. Single center wire 10 is held in place within wire holder ear 13 against the threads 2A, 2B, 2C, or 2D etc. of screw 2. Offset wires 4 and 7 are held in place by wire holder ear 14.

Since the wires 4,7 and 10 must engage the interior flank surfaces of the screw threads 2A, 2B, 2C or 2D, etc. in a position parallel to the lead angle of the screw threads 2A, 2B, 2C or 2D, etc., the wires are engaged perpendicular to the longitudinal axis of screw 2.

Wires 4, 7 and 10 are first placed against the appropriate flanks of the screw threads being measured as holder 14 is moved by spindle 19 of micrometer 29. The wires 4, 7 and 10 are held firmly in a vertical orientation against the screw 2. If oriented vertically, the wires tend to stay still by the force of gravity. If they are held at an angle or horizontally, the force of gravity acts to subject the wires 4,7 or 10 to movement, which is contraindicated when precisely measuring the pitch diameter of screw threads.

As shown in FIGS. 1-13, wire 10 is held in place vertically against the appropriate flanks of the screw threads on an opposite side of the screw 2 within wire holder ear 13, which wire holder ear 13 includes main portion 15, having an upper cantilevered ledge extension portion 16 and a lower cantilevered ledge portion 17, extending in spaced relationship away from each other, and away from main portion 15, so that center wire 10 is held in place in hole 18 of upper cantilevered portion 16 and a correspondingly hole (not shown) within lower cantilevered portion 17.

A lower weighted tail portion 19 is located below cantilevered portion 17 to hold the wire holder ear portion 13 in a vertical orientation, such that weighted portion 19 is retracted down.

Wire holder ear 13 is held in place against contact 18A of anvil portion 30 of micrometer 29 abutting rear portion 20 of wire holder ear 13.

Conversely, wire holder ear 14 for wires 4 and 7 includes a main portion 21, above which is situated upper cantilevered portion 22, and below which is situated lower cantilevered portion 23, such that cantilevered portions 22 and 23 are positioned in spaced relationship away from each other to permit the holding of offset wires 4 and 7 parallel in place for measuring the screw threads of screw 2. A weighted tail portion 26 is disposed below the lower cantilevered portion 23 to facilitate the vertical orientation of the wire holder ear portion 14, as it is weighted down by lower tail portion 26.

The wire holder ear 14 for offset wires 4 and 7 is firmly held in place by an engaging spindle portion 19 rotatable within collar portion 28 of micrometer 29, having indicating display member 32 with indicia, by rotational movement of spindle 19 connected to micrometer rod 33, which rod 33 is movable by rotation of handle 34 for tightening of wire holder ear 14, disposed to spindle 19, against the screw.

Preferably, the rotation of handle 34 controls a uniform force applied of wires 4,7 and 10 against screw threads 2A, 2B, 2C, 2D, etc. by a torque control built into handle 34.

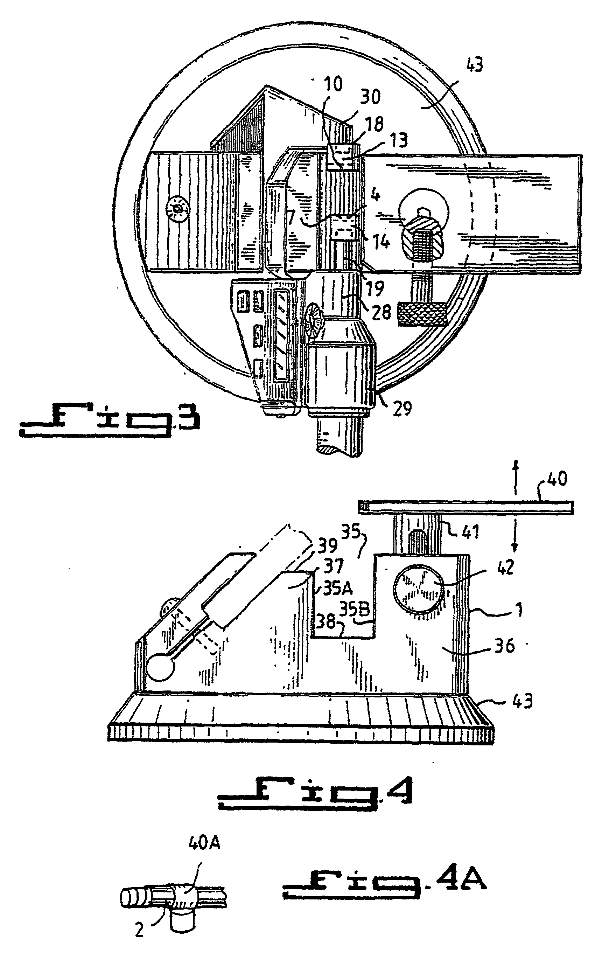

As shown in FIG. 4, the apparatus 1 includes a pedestal 36, having a generally horizontal ledge portion 39 and further having a vice jaw portion 37, within which micrometer 29 is held in place for measuring the pitch diameter of screw threads of screw 2.

A generally U-shaped recess 35 is indented within pedestal 36, and recess 35 is defined by vertical walls 35A and 35B extending upwardly from horizontal wall 38.

While drawing FIGS. 1-13 show single center wire holder ear 13 fixed in place by contact 18A against anvil 30 of micrometer 29 and wire holder ear 14 is rotatable about spindle 19 of micrometer 29, these two wire holder ears 13 and 14 are interchangeable, so that wire holder 14 may be alternately fixed in place by contact 18 against anvil 30 of micrometer 29 and wire holder ear 13 may conversely be rotatable about spindle 19.

While one wire holder, either wire holder ear 13 or 14, is held securely immobile by contact 18 against anvil portion 30 of micrometer 29, the other corresponding oppositely placed wire holder, either 13 or 14, is subject to a spinning movement about rotatable spindle 19 of micrometer 29. Therefore, recess 35 within pedestal 36 is provided to limit rotational movement of wire holder ear 13 or 14, so that the wire holder ear 13 or 14 will stay within a general vertical orientation, depending upon which wire holder ear 13 or 14 is attached to rotating spindle 19 of micrometer 29.

If rotation of spindle 19 causes the wire holder ear 13 or 14 to start to spin, the spinning motion of wire holder ear 13 or 14 is interrupted by contact of wire holder ear 13 or 14 against vertical wall 35A or 35B within recess 35.

To further facilitate the vertical orientation, the weighted portions 19 and 26 of wire holder ears 13 and 14 respectively, are at the bottom of wire holder ears 13 and 14, to insure the vertical orientation in conjunction with the force of gravity upon wire ear holders 13 or 14 disposed to rotatable spindle 19.

Therefore this vertical orientation of wire holder ear 13 or 14 is beneficial for accurate measurement with the wires 4, 7 and 10, since a horizontal orientation of the wires defies gravity and tends to cause an instability of the position of the wires, resulting in inaccurate measurements.

since the wires 4,7 and 10 are preferably oriented vertically, the screw 2 is held perpendicular to the wires 4,7 and 10 in a generally horizontal orientation.

Because the wires 4, 7 and 10 are oriented vertically, the screw 2, with threads being measured, is held horizontally by a holding means, such as upon ledge portion 40 of pedestal 36, or within a holding collar 40A, which ledge 40 is movable upward by pedestal 41 controlled by tightening member 42 within pedestal 36 of the apparatus 1. A base, generally circular, designated as reference number 43, is provided to stabilize the holding of the micrometer in place during measurement of the screw threads 2A, 2B, 2C and 2D, etc.

It is noted that center wire 10 and offset wires 4 and 7 may become worn if they are held in place constantly over a period of time. Therefore, in order to accurately measure the pitch diameter of screw threads, the center wire 10 may be moved upward or downward within hole 18 of wire holder ear portion 13 until a unworn portion of wire 10 is found.

Similarly, offset wires 4 and 7 may be movable vertically within holes 24 and 25 of wire holder ear 14 to move the worn portion of the wires 4 and 7 away from any screws to be measured.

When the results are tabulated, they are calculated by computer calculator portion 44 disposed to a further display means 45. The input data is transferred from the micrometer 29 via cable 46 to the computer calculator portion 44, which displays the measuring pitch diameter data on display means 45 or prints it on printer 47.

In operation, the holder 14, having wires 4 and 7, is moved by rotational or horizontal movement of spindle 19, to dispose the wire holder ear 14 in such position that wires 4 and 7 are held generally vertically in place within the tapered wire engaging flank surface portions 5, 6, 8 and 9 respectively of the screw threads 2B, 2C, 2D respectively, opposite the vertical wire 10 held in place within wire holder ear 14 against wire engaging flank surface portions 11 and 12 of the screw threads 2B and 2C.

While the wires 4 and 7 or 10 may not be vertical when they are being moved in place, as soon as they are at the proper position within the screw threads of the screw 2, having pitch diameter being measured, the wires snap into vertical alignment, which is further enhanced by the weighted portions 19 and 26 of wire holder ears 13 and 14 respectively.

As shown in FIGS. 12A-12J, another embodiment may be made to measure the minor diameter of screw threads of screw 2'. As noted before, the minor diameter is the diameter across the interior base of the threads, at the smallest portion of the screw thread cylinder. Since cylindrical wires 4,7 & 10 do not reach down to the bases 50, 51, 52 of screw thread 2A, therefore tapered pins 53,54 and 55 are utilized in a similar manner as pins 4,7 and 10 to measure the minor diameter.

As a further alternative, the tapered pins can be build into integral monoblocks 56 and 57, which are attached to contact portion 18 of anvil 30 and spindle 19 respectively. Monoblock 56 has a single linear protrusion 58 and monoblock 57 has two offset protrusions 59 and 60.

Moreover, as noted before, the wire holder ears 13 and 14 are limited in their rotational movement so they will not spin. They do not orient themselves in a horizontal orientation, as shown in the prior art Mahr Gage Company device which provides for holding the wires horizontally in an unstable position.

In contrast, the present invention holds the wires vertically so that the measurement can be accurately made of the pitch of the screw threads being measured.

It can be seen that the vertical orientation of wire holder ears 13 and 14 allows for accurate measurement of the screw threads of varying diameters.

A further hand-held embodiment of the present invention is shown and described by way of example in FIGS. 14-25. In the drawing FIGS. 14-25 there is provided a rotational limiting device 101 with an attachment 136 for attaching to a conventional micrometer for measuring the pitch diameter of screw threads, with the three-wire method, of a screw 102 having threads 102a, 102b, 102c, 102d respectively, wherein the pitch diameter is measured by pair of off-set wires 104 and 107, which are held against adjacent screw threads opposite to a single center wire 110.

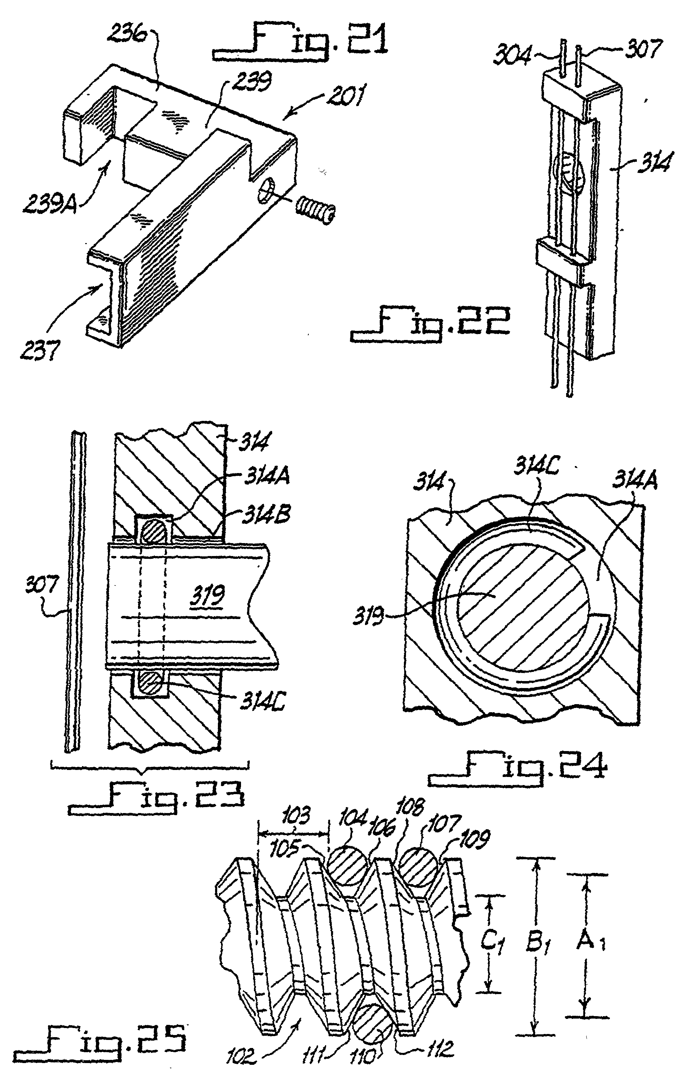

As shown in FIG. 25, reference numeral 103 designates the "pitch", of the linear distance from one screw thread to another.

As also shown in FIG. 25, the pitch diameter being measured of the threads of screw 102 is designated as A1. The major diameter of the threads is designated as B1, and the minor diameter of the threads is designated as C1.

Attachment 136 attaches to a micrometer, and wire 104 is held within the tapered wire contacting flank walls 105 and 106 of screw 102. Wire 107 is held in place within the tapered contacting flank walls 108 and 109 of the screw 102. The single center wire 110 is held in place within the tapered walls contacting flank walls 111 and 112 of the screw 102.

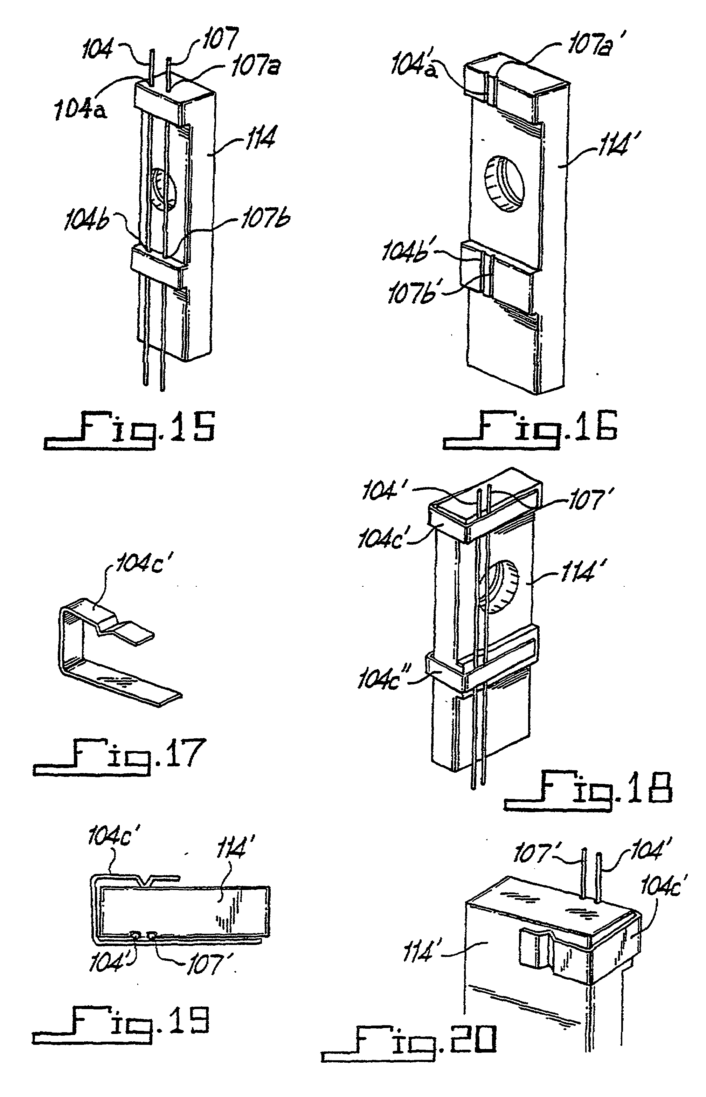

Attachment 136 enables single center wire 110 to be held in place within wire holder ear 113 against the threads 102a, 102b, 102c, or 102d etc. of screw 102. As shown in Figures 14 and 15, offset double wires 104 and 107 are held in place within holes 104a, 107a, 104b, 107b within double wire holder ear 114.

Since the double wires 104 and 107, and single center wire 110, must engage the interior flank surfaces of the screw threads 102a, 102b, 102c or 102d, etc. in a position parallel to the lead angle of the screw threads 102a, 102b, 102c or 102d, etc., the wires 104, 107, 110 are engaged perpendicular to the longitudinal axis of screw 102.

Wires 104, 107 and 110 are first placed against the appropriate flanks of the screw threads being measured as holder 114 is moved by spindle 119 of micrometer 129. As shown in FIG. 14, the wires 104, 107 and 110 are held firmly in a vertical orientation against the screw 102. If oriented vertically, the wires tend to stay still by the force of gravity. If they are held at an angle or horizontally, the force of gravity acts to subject the wires 104, 107 or 110 to movement, which is contraindicated when precisely measuring the pitch diameter of screw threads.

As shown in FIGS. 14 and 22-25, single center wire 110 is held in place vertically against the appropriate flanks of the screw threads on an opposite side of the screw 102 within single wire holder 113, which single wire holder 113 includes main portion 115, having an upper cantilevered ledge extension portion 116 and a lower cantilevered ledge portion 117, extending in spaced relationship away from each other, and away from main portion 115, so that single center wire 110 is held in place in hole 110A of upper cantilevered portion 116 and a correspondingly hole (not shown) within lower cantilevered portion 117.

A lower weighted tail portion 119 is located below cantilevered portion 117 to hold the wire holder ear portion 113 in a vertical orientation, such that weighted portion 119 is retracted down.

Wire holder ear 113 is held in place against anvil portion 130 of micrometer 129 abutting rear portion 120 of wire holder ear 113.

Conversely, wire holder ear 114 for wires 104 and 107 includes a main portion 121, above which is situated upper cantilevered portion 122, and below which is situated lower cantilevered portion 123, such that cantilevered portions 122 and 123 are positioned in spaced relationship away from each other to permit the holding of offset wires 104 and 107 parallel in place for measuring the screw threads of screw 102. A weighted tail portion 126 is disposed below the lower cantilevered portion 123 to facilitate the vertical orientation of the wire holder ear 114, as it is weighted down by lower tail portion 126 of holder ear 114.

The wire holder ear 114 for offset wires 104 and 107 is firmly held in place by an engaging spindle portion 119 rotatable within collar portion 128 of micrometer 129, having indicating display member 132, with indicia, by rotational movement of spindle 119 connected to micrometer rod 133, which rod 133 is movable by rotation of handle 134 for tightening of double wire holder ear 114, disposed to spindle 119, against screw.

Alternately, as shown in Figures 16,17 and 18, double wires 104' and 107' may be held in place within open grooves 104a', 107a' by clips 104c', 104c", which clips 104c' and 104c" are notched to provide contact against holder 114' at a point opposite to the double wires 104' and 107' within grooved holder 114' to maintain pressure on both wires at the same time.

Spring clip 104c' and 104c" retain wires 104' and 107' firmly within the grooves of grooved holder 114'. The clips 104c' and 104c" accommodate different wires of varying diameters and dimensions. The pressure point of the spring clip holder 104c' for the double wire holder 114' is on the opposite side of clip 104c' from wires 104' and 107' and lies in the direct center line between wires 104' and 107'. This assures spring clip holder 104c' creates equal pressure against both wires 104' and 107'.

For the single wire 110, the pressure point of the spring clip holder is on the opposite side, opposite single wire 110 and it lies in the direct center line of the single wire 110. Similarly, single center wire 110 is held in place within holes within single wire holder 113, or within grooves (not shown) and a clip similar to those shown with holder 114'.

Preferably, the rotation of handle 134 controls a uniform force applied of wires 104, 107 and 110 against screw threads 102a, 102b, 102c, 102d, etc. by a torque control built into handle 134 of the micrometer 129.

As shown in FIG. 14, the device 101 includes elongated anvil engaging attachment 136, having a slotted block portion 139, with a slot 139A for engaging the anvil 130 of a micrometer 129 and further having a rotational limiting collar track 137 attached to slotted block portion 139, which rotational limiting collar track 137 is held in place for limiting the movement of holder 113 having wire 110 and holder 114 having wires 104 and 107 for measuring the pitch diameter of screw threads of screw 102. The device 101 is fastened to anvil 130 of micrometer 129 by a fastening means 140, such as a set screw, threadable within a threaded bore 141 within block 139 of anvil engaging attachment 136; the set screw 140 being engageable against anvil 130 of micrometer 129.

A recess 135 is indented within the confines of rotational limiting collar track 137, and recess 135 is defined by vertical walls 135A, 135B, 135C and 135D extending upwardly from anvil engaging portion 136. Walls 135A and 135B are connected at their proximal and distal ends respectively by walls 135C and 135D.

In use, slotted block portion 139 is securely fixed to anvil portion 130 by means of a set screw 140 which is threadable within threaded guide tube 141 extending within slotted block portion 139 toward slot 139A to securely engage anvil portion 130 therein.

In another embodiment shown in FIG. 21, the device 201 includes an anvil engaging portion 236, having a slotted block portion 239 with slot 239A for engaging anvil 130 of micrometer 129, with a U-shaped rotational limiting collar track 237 attached to slotted block portion 239, to limit the rotational movement of holder 114 for wires 104 and 107 and holder 113 for wire 110.

While drawing FIG. 14 shows single center wire holder ear 113 fixed in place against anvil 130 of micrometer 129 and wire holder ear 114 is rotatable about spindle 119 of micrometer 129, these two wire holder ears 113 and 114 are interchangeable, so that wire holder 114 may be alternately fixed in place against anvil 130 of micrometer 129 and wire holder ear 113 may conversely be rotatable about spindle 119.

While one wire holder, either wire holder ear 113 or 114, is held securely immobile by contact 118 against anvil portion 130 of micrometer 129, the other corresponding oppositely placed wire holder, either 113 or 114, is subject to a spinning movement about rotatable spindle 119 of micrometer 129.

Therefore, recess 135 within rotational limiting collar track 136 is provided to limit rotational movement of wire holder ear 113 or 114, so that the wire holder ear 113 or 114 will stay within a general vertical orientation, depending upon which wire holder ear 113 or 114 is attached to rotating spindle 119 of micrometer 129.

If rotation of spindle 119 causes the wire holder ear 113 or 114 to start to spin, the spinning motion of wire holder ear 113 or 114 is interrupted by contact of wire holder ear 113 or 114 against vertical wall 135A or 135B within recess 135.

To further facilitate the vertical orientation, the weighted portions 119 and 126 of wire holder ears 113 and 114 respectively, are at the bottom of wire holder ears 113 and 114, to insure the vertical orientation in conjunction with the force of gravity upon wire ear holders 113 or 114 disposed to rotatable spindle 119.

Therefore this vertical orientation of wire holder ear 113 or 114 is beneficial for accurate measurement with the wires 104, 107 and 110, since a horizontal orientation of the wires defies gravity and tends to cause an instability of the position of the wires, resulting in inaccurate measurements.

Since the wires 104, 107 and 110 are preferably oriented vertically, the screw 102 is held perpendicular to the wires 104, 107 and 110 in a generally horizontal orientation.

It is noted that center wire 110 and offset wires 104 and 107 may become worn if they are held in place constantly over a period of time. Therefore, in order to accurately measure the pitch diameter of screw threads, the center wire 110 may be moved upward or downward within hole 110A of wire holder ear portion 113 until a unworn portion of wire 10 is found.

Similarly, offset wires 104 and 107 may be movable vertically within holes 104a and 107a of wire holder ear 114 to move the worn portion of the wires 104 and 107 away from any screws to be measured.

When the results are tabulated, they are calculated by optional computer calculator disposed to a further display means. The input data is transferred from the micrometer 129 via a cable to the computer calculator portion, which displays the measuring pitch diameter data on display means or prints it on printer.

In operation, the holder 114, having wires 104 and 107, is moved by rotational or horizontal movement of spindle 119, to dispose the wire holder ear 114 in such position that wires 104 and 107 are held generally vertically in place within the tapered flank surface portions 102A, 102B, 102C, 102D, etc. of the screw threads, opposite the vertical wire 110 held in place within wire holder ear 114.

While the wires 104 and 107 or 110 may not be vertical when they are being moved in place, as soon as they are at the proper position within the screw threads of the screw 102, having pitch diameter being measured, the wires snap into vertical alignment, which is further enhanced by the weighted portions 119 and 126 of wire holder ears 113 and 114 respectively.

In a further embodiment shown in FIGS. 22-25, wire holder 314 for the measuring wires 304 and 307 may be modified to increase tension upon the spindle of the micrometer. Shown in dotted lines with FIG 23 is an inner cylindrical recessed groove 314A which encircles the bore 314B within wire holder 314 to hold spring clamp 314C about spindle 319 within bore 314B of wire holder 314.

Spring clamp 314C puts tension upon the spindle 319, but is loosely fitted within inner cylindrical recess 314A of wire holder 314. This enables spindle 319 to rotate to advance the holder 314 toward a screw thread being measured, but the loose fitting of the wire holder 314 permits wire holder 314 to maintain a generally vertical position within the confines of a rotational limiting device, such as attachment device 101 or 201. A similar configuration may be made to a wire holder holding a single wire, if such a wire holder is engageable with spindle 319, instead of to the anvil of the micrometer.

Spring clamp 314C, however, does engage spindle 319 to prevent wire holder 314 from accidently falling off and moving longitudinally off of spindle 319.

Moreover, as noted before, the wire holders 113 and 114 are limited in their rotational movement so they will not spin. They do not orient themselves in a horizontal orientation, as shown in the prior art Mahr Gage Company device which provides for holding the wires horizontally in an unstable position.

In contrast, the devices according to the present invention enable to hold the wires vertically so that the measurement can be accurately made of the pitch of the screw threads being measured.

It can be seen that the vertical orientation of wire holder ears 113 and 114 allows for accurate measurement of the screw threads of varying diameters.

While the present invention described in connection with the various embodiments herein, it should be understood that other embodiments may be made without departing from the scope of the invention as defined in the appended claims.

## Claims

1. A measuring device for utilizing the three wire method of measuring pitch diameter and/or minor diameter of screw threads, the device comprising a micrometer having an anvil and an advancing spindle within the anvil,
a plurality of at least three cylindrical wires (4,7,10), said wires having an outer surface capable of contacting a midpoint of a flank of a screw thread between an outer edge and an inner edge of said screw thread;
a means to hold said wires in a generally vertical orientation during measurement so as to position said wires for contact with said threads, said means including a pair of wire holders (13,14) for engaging said respective three wires, wherein one first wire holder (13) holds a first wire (10) of the three wires and one second wire holder (14) holds a second wire (4) and a third wire (7) of the three wires; and
a means (1) to limit a rotational movement of said wire holders from the application of a rotational force, **characterized in that** said means to limit a rotational movement of said wire holders includes an anvil engaging attachment (1) which engages the anvil of the micrometer, said anvil engaging attachment having a slot (39), which closely receives said anvil, wherein one of the wire holders (13) is coupled to the anvil and wherein the other wire holder (14) is coupled to the spindle (19) such that rotation of the spindle causes motion of the spindle and the other wire holder (14) along the longitudinal spindle axis and causes rotation of the other wire holder (14) about the spindle axis, said anvil engaging attachment (1) including a movement limiting means having a recess (35) defined therein, wherein said other wire holder is movable within said recess (35), and wherein said recess (35) provides a barrier limiting the rotational movement of said other wire holder (14) to the confines of said recess.

2. The device as in claim 1, wherein said movement limiting means to limit the rotation of said wire holders (13,14) further includes
a generally U-shaped portion, said generally U-shaped portion having said recess (35) therein, said recess defining a restraining portion within which each said wire holder (14) is restrained in rotational movement.

3. The device as in claim 1, wherein said movement limiting means to limit the rotation of said wire holders (13,14) further includes
a collar portion, said collar portion surrounding said recess, said recess (35) defining a restraining portion within which each said wire holder is restrained in rotational movement to position said wires to engage said threads.

4. The device according to any of the preceding claims, wherein said means to limit the rotational movement of said wire holders (13,14) further comprises:
each of said wire holders having a respective weight (19,26) at a bottom portion of each said wire holder.

5. The device according to any of the preceding claims, said wire holders (13,14) including a generally extending upper cantilevered portion (16;22) in spaced relationship away from a generally extending lower cantilevered portion (17;23),
said generally extending upper and lower cantilevered portions extending horizontally away from each said main portion (15;21) of each said wire holder.

6. The device as in claim 5, further comprising at least one first opening (18; 24,25) within each said generally extending upper cantilevered portion (16;22), and at least one second opening within each said generally extending lower cantilevered portion (17; 23), said at least one first opening in each said generally extending upper cantilevered portion for insertion of at least one screw thread measuring wire of said three cylindrical wires (4,7,10) within said at least one first opening and said at least one second opening.

7. The device of claim 6, wherein said at least one screw thread measuring wire of said three cylindrical wires (4,7,10) is movable axially within said at least one first opening and said at least one second opening.

8. The device of claim 7, wherein said at least one screw thread measuring wire (104',107') is capable of contacting said screw threads along a portion of said at least one screw thread measuring wire.

9. The device of claim 8, wherein the at least one screw thread measuring wire (104'107') is further capable of contacting said screw threads the along different portions of said at least one screw thread measuring wire.

10. The device of any of claims 6 to 9, wherein the at least one first and second openings comprise at least one first and second grooves (104a', 104b', 104c', 104d'), at least one screw thread measuring wire of said three cylindrical wires holdable in each of said grooves by a spring clip (104c'; 104c'') having an intended pressure point.

11. A device as in claim 10, wherein the pressure point for said spring clip (104c',104c'') is contiguous with a centre line between a pair of said screw thread measuring wires.

12. The device as in claim 10 or claim 11, wherein the pressure point is opposite said at least one screw thread measuring wire.

13. The device according to claim 6, wherein the at least one first and second openings comprise at least one first and second holes (18,24,25).

14. The device of any of claims 6 to 13, wherein the second wire holder includes two first and second openings for receiving the second and third wires respectively, the first and second openings having a predetermined spacing for measuring a specific thread pitch.

15. The device of any of the preceding claims, wherein, the device further comprises a means (36) for generally horizontally supporting the screw with respect to the vertically orientated wire holders.

16. The device of claim 15, wherein said holding means is a collar (40a) within which the screw is supported.

17. The device of claim 15, wherein said means for holding said screw in a horizontal position includes a horizontal ledge (40).

18. The device of any of the preceding claims, wherein the anvil engaging attachment includes a vice jaw portion for holding said micrometer.

19. A combination of the device according to any of the preceding claims and a micrometer wherein at least one of said wires is movable toward at least one of said screw threads by a rotational means in said micrometer, said rotational means being a handle (34) controlling a uniform force applied by said at least one wire against at least one screw thread, said rotational means including a torque control disposed to said handle (34).

20. A measuring device for measuring pitch diameter and/or minor diameter of screw threads, the measuring device including a hand held three wire measurement device in the form of a micrometer with an anvil (130) and a spindle (119), and a plurality of holders (113,114) for the wires connected to the anvil and spindle respectively, said measuring device being **characterized by** a first micrometer anvil engaging portion (136) including a block, said block having a slotted recess (139) for insertion of the micrometer anvil (130) therebetween, by further including a wire holder rotational limiting track (135) extending from said block which provides a barrier limiting the rotational movement of the wire holder connected to the spindle (119) and by a means for tightening said block to the anvil (130).

21. A device according to claim 20, wherein the means for tightening said block comprises a set screw (140) threadable within a threaded bore within said block (139) against the anvil (130) of the micrometer.

22. A device according to claim 20 or claim 21, wherein the rotational limiting track (135) comprises a collar within which the wire holders are arranged to rotate.

23. A device according to claim 20 or claim 21, wherein the rotational limiting track (135) comprises a U-shaped track within which the wire holders are arranged to rotate.

## Patentansprüche

1. Meßeinrichtung zur Verwendung des Drei-Draht-Verfahrens des Messens von Flankendurchmesser und/oder Kerndurchmesser von Schraubengewinden, wobei die Einrichtung
ein Mikrometer/eine Meßschraube mit einem Amboß und einer vorrückenden Spindel innerhalb des Amboß,
eine Mehrzahl von mindestens drei zylindrischen Drähten (4, 7, 10), wobei die Drähte eine äußere Oberfläche aufweisen, die einen Mittelpunkt einer Flanke eines Schraubengewindes zwischen einem äußeren Rand und einem inneren Rand des Schraubengewindes berühren können,
ein Mittel zum Halten der Drähte in einer im wesentlichen vertikalen Ausrichtung während einer Messung, um die Drähte für einen Kontakt mit den Gewindegängen zu positionieren, wobei das Mittel ein Paar Drahthalter (13, 14) zum Eingriff mit den betreffenden drei Drähten aufweist, wobei ein erster Drahthalter (13) einen ersten Draht (10) der drei Drähte und ein zweiter Drahthalter (14) einen zweiten Draht (4) und einen dritten Draht (7) der drei Drähte hält; und
ein Mittel (1) zum Begrenzen einer Drehbewegung der Drahthalter von der Ausübung einer Drehkraft, umfaßt
**dadurch gekennzeichnet, daß**
das Mittel zum Begrenzen einer Drehbewegung der Drahthalter eine Amboßeingriffs-Zusatzeinrichtung (1) aufweist, die mit dem Amboß des Mikrometers in Eingriff steht, wobei die Amboßeingriffs-Zusatzeinrichtung einen Schlitz (39) aufweist, der den Amboß eng aufnimmt, wobei einer der Drahthalter (13) mit dem Amboß verbunden und wobei der andere Drahthalter (14) mit der Spindel (19) so verbunden ist, daß eine Drehung der Spindel eine Bewegung der Spindel und des anderen Drahthalters (14) entlang der Spindellängsachse bewirkt und eine Drehung des anderen Drahthalters (14) um die Spindelachse bewirkt, wobei die Amboßeingriffs-Zusatzeinrichtung (1) ein Bewegungsbegrenzungsmittel mit einem darin definierten Rezeß (35) aufweist, wobei der andere Drahthalter in dem Rezeß (35) bewegbar ist und wobei der Rezeß (35) eine Sperre bildet, die die Drehbewegung des anderen Drahthalters (14) auf die Begrenzungen des Rezesses begrenzt.

2. Einrichtung nach Anspruch 1, bei der das Bewegungsbegrenzungsmittel zum Begrenzen der Drehung der Drahthalter (13, 14) weiter
einen im wesentlichen U-förmigen Abschnitt umfaßt, wobei der im wesentlichen U-förmige Abschnitt darin den Rezeß (35) aufweist, wobei der Rezeß einen Hinderungsabschnitt definiert, innerhalb dessen jeder Drahthalter (14) in der Drehbewegung gehindert wird.

3. Einrichtung nach Anspruch 1, bei der das Bewegungsbegrenzungsmittel zum Begrenzen der Drehung der Drahthalter (13, 14) weiter
einen Einfassungsabschnitt umfaßt, wobei der Einfassungsabschnitt den Rezeß umgibt, wobei der Rezeß (35) einen Hinderungsabschnitt definiert, in dem jeder Drahthalter in der Drehbewegung gehindert wird, um die Drähte zum Eingriff mit den Gewindegängen zu positionieren.

4. Einrichtung nach einem der vorhergehenden Ansprüche, bei der das Mittel zum Begrenzen der Drehbewegung der Drahthalter (13, 14) weiter umfaßt, daß
jeder Drahthalter ein entsprechendes Gewicht (19, 26) an einem unteren Abschnitt jedes Drahthalters aufweist.

5. Einrichtung nach einem der vorhergehenden Ansprüche, wobei die Drahthalter (13, 14) einen sich im wesentlichen erstreckenden oberen freitragenden Abschnitt (16; 22) in beabstandetem Verhältnis weg von einem sich im wesentlichen erstreckenden unteren freitragenden Abschnitt (17; 23) umfassen, wobei sich die sich im wesentlichen erstreckenden oberen und unteren freitragenden Abschnitte horizontal weg von dem jeweiligen Hauptabschnitt (15; 21) jedes Drahthalters erstrecken.

6. Einrichtung nach Anspruch 5, weiter umfassend mindestens eine erste Öffnung (18; 24, 25) in jedem sich im wesentlichen erstreckenden oberen freitragenden Abschnitts (16; 22) und mindestens eine zweite Öffnung in jedem sich im wesentlichen erstreckenden unteren freitragenden Abschnitts (17; 23), wobei mindestens eine erste Öffnung in jedem sich im wesentlichen erstreckenden oberen freitragenden Abschnitt zum Einführen mindestens eines Schraubengewinde-Meßdrahtes der drei zylindrischen Drähte (4, 7, 10) in der mindestens einen ersten Öffnung und der mindestens einen zweiten Öffnung vorgesehen ist.

7. Einrichtung nach Anspruch 6, bei der der mindestens eine Schraubengewinde-Meßdraht der drei zylindrischen Drähte (4, 7, 10) axial in der mindestens einen ersten Öffnung und der mindestens einen zweiten Öffnung bewegbar ist.

8. Einrichtung nach Anspruch 7, bei der der mindestens eine Schraubengewinde-Meßdraht (104', 107') die Schraubengewindegänge entlang eines Abschnitts des mindestens einen Schraubengewinde-Meßdrahtes berühren kann.

9. Einrichtung nach Anspruch 8, bei der der mindestens eine Schraubengewinde-Meßdraht (104', 107') des weiteren die Schraubengewindegänge entlang verschiedener Abschnitte des mindestens einen Schraubengewinde-Meßdrahtes berühren kann.

10. Einrichtung nach einem der Ansprüche 6 bis 9, bei der die mindestens eine erste und eine zweite Öffnung mindestens eine erste und eine zweite Rille (104a', 104b', 104c', 104d') umfaßt, wobei mindestens ein Schraubengewinde-Meßdraht der drei zylindrischen Drähte, in jeder der Rillen durch eine Federklemme (104c'; 104c") haltbar ist, die einen vorgesehenen Druckpunkt hat.

11. Einrichtung nach Anspruch 10, bei der der Druckpunkt für die Federklemme (104c', 104c") an eine Mittellinie zwischen einem Paar der Schraubengewinde-Meßdrähte angrenzt.

12. Einrichtung nach Anspruch 10 oder Anspruch 11, bei der der Druckpunkt gegenüber dem mindestens einen Schraubengewinde-Meßdraht liegt.

13. Einrichtung nach Anspruch 6, bei der die mindestens eine erste und eine zweite Öffnung mindestens ein erstes und ein zweites Loch (18, 24, 25) umfassen.

14. Einrichtung nach einem der Ansprüche 6 bis 13, bei der der zweite Drahthalter zwei erste und zweite Öffnungen zum Aufnehmen des zweiten bzw. des dritten Drahtes umfaßt, wobei die erste und zweite Öffnung einen vorbestimmten Abstand zum Messen einer bestimmten Gewindeteilung aufweisen.

15. Einrichtung nach einem der vorhergehenden Ansprüche, bei der die Einrichtung weiter ein Mittel (36) zum im wesentlichen horizontalen Tragen der Schraube in Bezug auf die vertikal ausgerichteten Drahthalter umfaßt.

16. Einrichtung nach Anspruch 15, bei der das Haltemittel eine Einfassung (40a) ist, in der die Schraube getragen wird.

17. Einrichtung nach Anspruch 15, bei der das Mittel zum Halten der Schraube in einer horizontalen Position eine horizontale Lagerung (40) umfaßt.

18. Einrichtung nach einem der vorhergehenden Ansprüche, bei der die Amboßeingriffs-Zusatzeinrichtung einen Schraubstockbackenabschnitt zum Halten des Mikrometers umfaßt.

19. Eine Kombination der Einrichtung nach einem der vorhergehenden Ansprüche und eines Mikrometers, bei der mindestens einer der Drähte in Richtung auf mindestens einen der Schraubengewindegänge zu durch ein Drehmittel in dem Mikrometer bewegbar ist, wobei das Drehmittel ein Griff (34) ist, der eine gleichmäßige Kraft steuert, die von dem mindestens einen Draht gegen mindestens einen Schraubengewindegang ausgeübt wird, wobei das Drehmittel eine Drehmomentsteuerung umfaßt, die an dem Handgriff (34) angeordnet ist.

20. Meßeinrichtung zum Messen von Flankendurchmesser und/oder Kerndurchmesser von Schraubengewindegängen, wobei die Meßeinrichtung eine in der Hand gehaltene Drei-Draht-Meßeinrichtung in Form eines Mikrometers mit einem Amboß (130) und einer Spindel (119) und einer Mehrzahl Halter (113, 114) für die Drähte, die mit dem Amboß bzw. der Spindel verbunden sind, umfaßt, wobei die Meßeinrichtung **gekennzeichnet ist durch** einen ersten Mikrometeramboß-Eingriffsabschnitt (136), der einen Block umfaßt, wobei der Block einen geschlitzten Rezeß (139) zum Einführen des Mikrometeramboß (130) dazwischen einschließt, des weiteren **durch** Umfassen einer Drahthalter-Drehbegrenzungsspur (135), die sich von dem Block aus erstreckt, der eine Sperre bildet, die die Drehbewegung des Drahthalters, der mit der Spindel (119) verbunden ist, begrenzt, und **durch** ein Mittel zum Festziehen des Blocks an dem Amboß (130).

21. Einrichtung nach Anspruch 20, bei der das Mittel zum Festziehen des Blocks eine Einstellschraube (140) umfaßt, die in einer Gewindebohrung innerhalb des Blocks (139) gegen den Amboß (130) des Mikrometers einschraubbar ist.

22. Einrichtung nach Anspruch 20 oder Anspruch 21, bei der die Drehbegrenzungsspur (135) eine Einfassung aufweist, in der die Drahthalter zum Drehen angeordnet sind.

23. Einrichtung nach Anspruch 20 oder Anspruch 21, bei der die Drehbegrenzungsspur (135) eine U-förmige Spur aufweist, innerhalb der die Drahthalter zum Drehen angeordnet sind.

## Revendications

1. Dispositif de mesure destiné à utiliser la méthode à trois fils de mesure du diamètre sur flancs et/ou du diamètre de l'âme de filets de vis, le dispositif comportant un micromètre ayant une enclume et une broche qui avance à l'intérieur d'une enclume,
une multiplicité d'au moins trois fils cylindriques (4, 7, 10), lesdits fils ayant une surface extérieure capable de venir en contact avec un point milieu d'un flanc d'un filet de vis entre un bord extérieur et un bord intérieur dudit filet de vis;
des moyens destinés à maintenir lesdits fils dans une orientation globalement verticale pendant la mesure de façon à positionner lesdits fils pour contact avec lesdits filets, lesdits moyens comprenant une paire de supports de fil (13, 14) destinés à engager lesdits trois fils respectifs, un premier support de fil (13) maintenant un premier fil (10) des trois fils et un deuxième support de fil (14) maintenant un deuxième fil (4) et un troisième fil (7) des trois fils; et
des moyens (1) destinés à limiter un mouvement en rotation desdits supports de fil dû à l'application d'une force de rotation, **caractérisé en ce que** lesdits moyens destinés à limiter un mouvement de rotation desdits supports de fil comprennent une fixation d'engagement d'enclume (1) qui engage l'enclume du micromètre, ladite fixation d'engagement d'enclume ayant une fente (39), qui reçoit ladite enclume, un des supports de fil (13) étant relié à l'enclume et l'autre support de fil (14) étant relié à la broche (19) de telle sorte que la rotation de la broche provoque un déplacement de la broche et de l'autre support de fil (14) le long de l'axe de broche longitudinal et provoque la rotation de l'autre support de fil (14) autour de l'axe de broche, ladite fixation d'engagement d'enclume (1) comprenant des moyens de limitation de mouvement ayant un renfoncement (35) défini dedans, ledit autre support de fil étant mobile à l'intérieur dudit renfoncement (35), et ledit renfoncement (35) procurant une barrière limitant le mouvement de rotation dudit autre support de fil (14) aux confins dudit renfoncement.

2. Dispositif selon la revendication 1, dans lequel lesdits moyens de limitation de mouvement destinés à limiter la rotation desdits supports de fil (13, 14) comprennent en outre
une partie globalement en forme de U, ladite partie globalement en forme de U ayant ledit renfoncement (35) dedans, ledit renfoncement définissant une partie de limitation à l'intérieur de laquelle chaque dit support de fil (14) est limité en mouvement de rotation.

3. Dispositif selon la revendication 1, dans lequel lesdits moyens de limitation de mouvement destinés à limiter la rotation desdits supports de (13, 14) comprennent en outre
une partie de collier, ladite partie de collier entourant ledit renfoncement, ledit renfoncement (35) définissant une partie de limitation à l'intérieur de laquelle chaque dit support de fil est retenu en mouvement de rotation afin de positionner lesdits fils de façon à engager lesdits filets.

4. Dispositif selon l'une quelconque des revendications précédentes, dans lequel lesdits moyens destinés à limiter le mouvement de rotation desdits supports de fil (13, 14) comportent en outre :
chacun desdits supports de fil ayant un poids respectif (19, 26) au niveau d'une partie inférieure de chaque dit support de fil.

5. Dispositif selon l'une quelconque des revendications précédentes, lesdits supports de fil (13, 14) comprenant une partie supérieure s'étendant globalement en porte-à-faux (16, 22) en relation espacée à l'écart d'une partie inférieure s'étendant globalement en porte-à-faux (17, 23),
lesdites parties supérieure et inférieure s'étendant globalement en porte-à-faux s'étendant horizontalement à l'écart de chaque dite partie principale (15, 21) de chaque dit support de fil.

6. Dispositif selon la revendication 5, comportant en outre au moins une première ouverture (18; 24, 25) à l'intérieur de chaque dite partie supérieure s'étendant globalement en porte-à-faux (16; 22), et au moins une deuxième ouverture à l'intérieur de chaque dite partie inférieure s'étendant globalement en porte-à-faux (17; 23), ladite au moins une première ouverture dans chaque dite partie supérieure s'étendant globalement en porte-à-faux pour insertion d'au moins un fil de mesure de filet de vis desdits trois fils cylindriques (4, 7, 10) à l'intérieur de ladite au moins une première ouverture et ladite au moins une deuxième ouverture.

7. Dispositif selon la revendication 6, dans lequel ledit au moins un fil de mesure de filet de vis desdits trois fils cylindriques (4, 7, 10) est mobile axialement à l'intérieur de ladite au moins une première ouverture et de ladite au moins une deuxième ouverture.

8. Dispositif selon la revendication 7, dans lequel ledit au moins un fil de mesure de filet de vis (104', 107') est capable de venir en contact avec lesdits filets de vis le long d'une partie dudit au moins un fil de mesure de filet de vis.

9. Dispositif selon la revendication 8, dans lequel ledit au moins un fil de mesure de filet de vis (104', 107') est en outre capable de venir en contact avec lesdits filets de vis le long des différentes parties dudit au moins un fil de mesure de filet de vis.

10. Dispositif selon l'une quelconque des revendications 6 à 9, dans lequel les au moins une première et une deuxième ouverture comportent au moins une première et une deuxième rainure (104a', 104b', 104c', 104d'), au moins un fil de mesure de filet de vis desdits trois fils cylindriques pouvant être maintenus dans chacune desdites rainures par un anneau élastique (104c', 104c'') ayant un point de pression prévu.

11. Dispositif selon la revendication 10, dans lequel le point de pression pour ledit anneau élastique (104c', 104c'') est contigu à une ligne centrale entre une paire desdits fils de mesure de filet de vis.

12. Dispositif selon la revendication 10 ou la revendication 11, dans lequel le point de pression est à l'opposé dudit au moins un fil de mesure de filet de vis.

13. Dispositif selon la revendication 6, dans lequel les au moins une première et une deuxième ouverture comporte au moins un premier et un deuxième trou (18, 24, 25).

14. Dispositif selon l'une quelconque des revendications 6 à 13, dans lequel le deuxième support de fil comprend deux première et deuxième ouvertures destinées à recevoir les deuxième et troisième fils respectivement, les première et deuxième ouvertures ayant un espacement prédéterminé afin de mesurer un pas de filet spécifique.

15. Dispositif selon l'une quelconque des revendications précédentes, dans lequel le dispositif comporte en outre des moyens (36) destinés à supporter globalement horizontalement la vis par rapport aux supports de fil orientés verticalement.

16. Dispositif selon la revendication 15, dans lequel lesdits moyens de maintien sont constitués par un collier (40a) à l'intérieur duquel est supportée la vis.

17. Dispositif selon la revendication 15, dans lequel lesdits moyens destinés à maintenir ladite vis dans une position horizontale comprennent un rebord horizontal (40).

18. Dispositif selon l'une quelconque des revendications précédentes, dans lequel la fixation d'engagement d'enclume comprend une partie de mâchoire d'étau destinée à maintenir ledit micromètre.

19. Combinaison du dispositif selon l'une quelconque des revendications précédentes et d'un micromètre, dans laquelle au moins un desdits fils est mobile vers au moins un desdits filets de vis par des moyens de rotation dans ledit micromètre, lesdits moyens de rotation étant une poignée (34) qui commande une force uniforme appliquée par ledit au moins un fil contre au moins un filet de vis, lesdits moyens de rotation comprenant une commande de couple disposée sur ladite poignée (34).

20. Dispositif de mesure destiné à mesurer le diamètre sur flancs et/ou le diamètre de l'âme des filets de vis, le dispositif de mesure comprenant un dispositif de mesure à trois fils tenu manuellement sous la forme d'un micromètre avec une enclume (130) et une broche (119), et plusieurs supports (113, 114) pour les fils reliés à l'enclume et la broche respectivement, ledit dispositif de mesure étant **caractérisé par** une première partie d'engagement d'enclume de micromètre (136) comprenant un bloc, ledit bloc ayant un renfoncement fendu (139) pour insertion de l'enclume de micromètre (130) dedans, comprenant en outre une piste de limitation de rotation de support de fil (135) qui s'étend depuis ledit bloc et qui procure une barrière limitant le mouvement de rotation du support de fil relié à la broche (119) et des moyens destinés à serrer ledit bloc sur l'enclume (130).

21. Dispositif selon la revendication 20, dans lequel les moyens destinés à serrer ledit bloc comprennent une vis de réglage (140) pouvant être vissée à l'intérieur d'un alésage fileté à l'intérieur dudit bloc (139) contre l'enclume (130) du micromètre.

22. Dispositif selon la revendication 20 ou la revendication 21, dans lequel la piste de limitation de rotation (135) comporte un collier à l'intérieur duquel les supports de fil sont prévus pour tourner.

23. Dispositif selon la revendication 20 ou la revendication 21, dans lequel la piste de limitation de rotation (135) comporte une piste en forme de U à l'intérieur de laquelle les supports de fil sont prévus pour tourner.
